# FASCICULE DE BREVET EUROPEEN

(11) **EP 1 263 886 B1**
(45) Date de publication et mention de la délivrance du brevet: **12.07.2006**
(21) Numéro de dépôt: 01907877.3
(22) Date de dépôt: 22.02.2001
(51) Int. Cl.: C08L 101/00

(54) **COMPOSITION THERMOPLASTIQUE TRANSPARENTE CONTENANT DES PARTICULES DE POLYTETRAFLUOROETHENE**
DURCHSCHEINENDE THERMOPLASTZUSAMMENSETZUNG MIT POLYTETRAFLUORETHENTEILCHEN
TRANSPARENT THERMOPLASTIC COMPOSITION CONTAINING POLYTETRAFLUOROETHYLENE PARTICLES

(30) Priorité: 07.03.2000 FR 0002901
(43) Date de publication de la demande: 11.12.2002
(73) Titulaire: Arkema, 92800 Puteaux (FR)
(72) Inventeur: BRUNEAU, Jean-Michel, F-27140 Gisors (FR); STASI, Alberto, Luca, I-20017 Rho (IT)
(74) Mandataire: Granet, Pierre
(86) Numéro de dépôt international: PCT/FR2001/000521
(87) Numéro de publication internationale: WO 2001/066644

(56) Documents cités:
- EP-A- 0 331 456
- WO-A-91/09912
- DE-A- 1 694 217
- DE-A- 3 729 872
- DE-A- 4 328 384
- US-A- 3 005 795
- US-A- 4 491 553
- US-A- 5 102 696

## Description

La présente invention concerne une composition en matière plastique transparente comprenant des particules de polytétrafluoroéthylène (PTFE) ou un mélange de ces particules de PTFE et de particules minérales et/ou organiques, composition qui est utilisable pour former des articles façonnés, en particulier des plaques jouant le rôle de guide de lumière et diffusant la lumière. Ces plaques sont particulièrement utilisables pour des systèmes d'affichage lumineux, tels que les panneaux d'affichage lumineux publicitaires ou signalétiques et pour des écrans lumineux plats utiles par exemple pour des dispositifs à cristaux liquides.

Des systèmes d'affichage lumineux sont connus et comprennent généralement, monté dans un encadrement approprié, un ensemble comprenant une plaque ou panneau en matière plastique transparente contenant des particules de matière pouvant diffuser la lumière.

La source de lumière, généralement des tubes fluorescents, peut se trouver au voisinage d'une face du panneau en matière thermoplastique et on observe, par la face opposée, la lumière transmise directement et celle diffusée par les particules contenues dans le panneau. Dans ce cas, le panneau en matière thermoplastique contient une grande quantité de particules diffusantes pour le rendre suffisamment opaque pour masquer la source de lumière. Le panneau est intégré dans un caisson contenant les tubes fluorescents. Ces tubes doivent être suffisamment nombreux afin d'assurer une bonne répartition de l'intensité lumineuse. Ce caisson a l'inconvénient d'être épais et ce dispositif consomme beaucoup d'énergie.

La source de lumière peut aussi se trouver au voisinage d'un ou des bords du panneau de manière à éclairer celui-ci par la tranche ou chant. Ce type de panneau fonctionne alors en guide de lumière. Celle-ci est donc réfléchie et diffusée par les particules diffusantes contenues dans le panneau et une partie de la lumière diffusée est observée à travers l'une ou les deux faces du panneau. Si le panneau contient une grande quantité de particules diffusantes, le chemin optique suivi par la lumière est court et une partie de la surface ne sera pas ou sera mal éclairée. Si le panneau contient peu de particules diffusantes, l'intensité de la lumière diffusée est faible. L'intensité lumineuse diffusée diminue en fonction de l'éloignement de la source de lumière.

On a donc cherché des compositions en matière thermoplastique transparente moulable en articles façonnés, en particulier sous forme de plaques utilisables, par exemple, comme panneaux de dispositifs d'affichage lumineux qui, tout en contenant un minimum de particules diffusantes, permettent une intensité lumineuse diffusée maximale et uniforme sur toute la surface de l'article façonné. On a trouvé, comme décrit dans la demande de brevet européen EP-A-0893481, que l'on pouvait associer à la matière thermoplastique transparente, en particulier le poly(méthacrylate de méthyle), une quantité déterminée (de 20 ppm à 1000 ppm) d'un additif particulier (polyamide) sous forme de particules de dimension moyenne comprise entre 0,4 et 200 µm. Par rapport aux solutions classiques, ce dispositif diminue la consommation d'énergie, apporte un avantage esthétique en réduisant l'épaisseur du panneau lumineux et peut alléger la structure porteuse.

On cherche encore à améliorer le rendement lumineux des articles façonnés, en particulier des plaques.

La composition thermoplastique selon l'invention pour des articles façonnés diffusant la lumière à base de matière thermoplastique transparente formée de (co)polymère (méth)acrylique et de particules diffusant la lumière comprend des particules de poly(tétrafluoroéthylène) - PTFE - ou un mélange de particules de PTFE et de particules de composé minéral et/ou organique, ces particules diffusant la lumière ayant une dimension moyenne de 0,5 µm à 200 µm et un indice de réfraction différent de celui de la matière thermoplastique transparente d'au moins ± 0,05 et étant utilisées en quantité, par rapport à la composition totale, de 5 ppm à 2000 ppm en poids.

Les particules diffusant la lumière, ont de préférence une dimension moyenne de 2 µm à 20 µm.

La composition thermoplastique selon l'invention contient, de préférence, de 10 à 200 ppm et particulièrement de 30 à 100 ppm en poids de particules diffusant la lumière.

L'indice de réfraction des particules diffusant la lumière diffère de préférence de celui de la matière thermoplastique d'au moins ± 0,1.

La composition selon l'invention peut aussi contenir des additifs comme des colorants.

Le (co)polymère thermoplastique (méth)acrylique peut être, en particulier, constitué par un homopolymère de méthacrylate d'alkyle ou par un copolymère dérivé de méthacrylate d'alkyle et d'au moins un monomère à insaturation(s) éthylénique(s) copolymérisable(s) avec le méthacrylate d'alkyle.

Comme méthacrylate d'alkyle, on peut citer notamment les composés dans lesquels le groupe alkyle a de 1 à 8 atomes de carbone, par exemple le méthacrylate de méthyle, d'éthyle, de propyle, d'isopropyle et de butyle. Un monomère particulièrement préféré est le méthacrylate de méthyle.

Le (co)polymère thermoplastique (méth)acrylique comprend, de préférence, de 70 à 100 % en poids du monomère principal : le méthacrylate d'alkyle, et de 0 à 30 % en poids de monomère(s) à insaturation(s) éthylénique(s) copolymérisable(s) avec le méthacrylate d'alkyle. Ce(s) monomère(s) à insaturation(s) éthylénique(s) sont choisis par exemple, parmi les acrylates d'alkyle en C₁-C₈, le styrène, les styrènes substitués, l'acrylonitrile, le méthacrylonitrile, les méthacrylates d'alkyle en C₁-C₈ différents du monomère principal, les acrylates et méthacrylates d'hydroxyalkyle, les acrylates et méthacrylates d'alcoxyalkyle ou d'aryloxyalkyle, dans lesquels le groupe alkyle a de 1 à 4 atomes de carbone, l'acrylamide, le méthacrylamide, l'acide acrylique, l'acide méthacrylique, les maléimides et les diméthacrylates alkylènes glycol, dans lequel le groupe alkylène a de 1 à 4 atomes de carbone.

Les (co)polymères (méth)acryliques peuvent être obtenus par tout procédé connu, par exemple par polymérisation en suspension ou en masse.

De préférence, les particules diffusant la lumière sont constituées uniquement par du PTFE.

Les particules diffusant la lumière peuvent aussi être constituées par un mélange comprenant des particules de PTFE, de préférence en quantité majoritaire, et des particules de composé minéral, comme le dioxyde de titane, le sulfate de baryum, l'oxyde de zinc et/ou des particules de composé organique, comme du polystyrène réticulé ou des particules à structure multicouche, par exemple bicouche, formées d'au moins un coeur de polystyrène réticulé.

La composition selon l'invention peut être obtenue par mélange de la matière thermoplastique par exemple sous forme de granulés, des particules de matière diffusante (polytétrafluoroéthylène et, éventuellement, des particules de composé minéral et/ou organique) et éventuellement d'autres additifs tels que des colorants, ces particules et additifs étant, en général, sous forme de mélange maître. Ce mélange peut être réalisé dans tout dispositif approprié.

Les articles façonnés diffusant la lumière que l'on peut fabriquer à partir de la composition thermoplastique décrite précédemment peuvent être obtenus par divers procédés connus de moulage, en particulier par extrusion, injection, compression, avantageusement par extrusion. On obtient alors des produits en plaques et des produits moulés de formes variées.

La composition selon l'invention est particulièrement appropriée pour fabriquer des articles par extrusion. En effet, pour que l'article façonné ait des propriétés diffusantes, la composition à partir de laquelle il est fabriqué, doit contenir des particules qui ne fondent pas à la température utilisée pour l'extrusion. La composition selon l'invention qui contient des particules de PTFE est particulièrement appropriée puisque ces particules ont une température de fusion élevée (320°C). C'est aussi le cas des compositions qui comprennent un mélange de particules tel que décrit précédemment, particulièrement celui à base de PTFE et de polystyrène réticulé.

Les articles façonnés peuvent aussi être obtenus directement sous forme de plaques par polymérisation en masse d'un mélange de monomères (méth)acryliques et éventuellement de leur prépolymère, en présence des particules diffusant la lumière (polytétrafluoroéthylène et éventuellement des particules de composé minéral et/ou organique) et des autres éventuels additifs, dans un moule formé par deux plaques en verre (procédé par coulée).

Pour cette polymérisation en masse, on peut utiliser tout initiateur de radicaux libres connus, par exemple des composés diazoïques comme l'azo-bis-isobutyronitrile (AIBN), des peroxydes, comme le peroxyde de benzoyle. La copolymérisation a lieu généralement en présence d'un agent de transfert de chaîne, tel que des terpènes monocycliques diinsaturés et des terpènes bicycliques monoinsaturés tels que le terpinolène, des mercaptans, comme le tertio-dodécyl-mercaptan.

On peut aussi ajouter des agents favorisant le démoulage des plaques, par exemple l'acide stéarique, le dioctylsulfosuccinate de sodium, en quantité habituellement utilisée.

Les articles façonnés selon l'invention, et, en particulier des plaques, peuvent être aussi constitués d'un matériau thermoplastique transparent, tel que ceux mentionnés précédemment, comprenant une concentration en particules diffusant la lumière, comme définies dans l'invention, qui varie dans toute l'épaisseur de l'article, la plus forte concentration se trouvant dans une zone proche de la surface de diffusion. Cette différence de concentration dans l'épaisseur de l'article peut être progressive en se présentant sous forme de gradient de concentration. Ce mode de réalisation permet d'augmenter la transmission de la lumière dans la zone de l'article à moindre concentration en particules diffusant la lumière et, par suite, une plus grande uniformité de l'intensité de lumière diffusée sur toute la surface de l'article, en particulier dans des zones éloignées de la source de lumière. La concentration en particules diffusant la lumière peut aussi varier suivant la longueur de l'article façonné, en particulier une plaque, la plus faible concentration se trouvant dans la zone proche de la source de lumière.

Les plaques, obtenues à partir des compositions selon l'invention, peuvent avoir différentes épaisseurs suivant l'utilisation envisagée, et notamment de 3 mm à 25 mm. Pour des systèmes d'affichage lumineux publicitaires, l'épaisseur est généralement de 8 à 20 mm. Pour des écrans lumineux plats, elle est généralement de 3 à 6 mm.

L'extrusion est un procédé approprié pour fabriquer des articles (plaques par exemple) de l'épaisseur indiquée précédemment et, en particulier, de faible épaisseur. Le procédé d'extrusion procure une tolérance d'épaisseur faible par rapport à d'autres procédés de fabrication, ce qui assure la reproductibilité de plaques et donc de l'intensité lumineuse émise, et facilite le montage des plaques dans des cadres aux dimensions précises. Ce type de spécification est particulièrement requis pour la réalisation d'écrans lumineux plats.

Il est aussi possible de fabriquer des panneaux diffusant la lumière, qui comprennent, par exemple un support en un matériau thermoplastique transparent, tel que celui mentionné précédemment, et une couche diffusante formée de la composition thermoplastique diffusante décrite précédemment, placée sur une face ou sur les deux faces du support. Ce produit peut être obtenu par tout procédé approprié, par exemple par coextrusion, plaxage. Dans ce mode de réalisation, le support peut avoir une épaisseur de 2 à 25 mm et la ou les couche(s) diffusante(s) une épaisseur de 20 à 1000 µm.

Les plaques obtenues à partir des compositions selon l'invention peuvent être utilisées dans tout système d'affichage lumineux, et notamment celui décrit dans la demande de brevet EP-A-0893481.

Les plaques selon l'invention peuvent aussi être utilisées comme écrans lumineux plats par exemple pour des écrans à cristaux liquides (LCD - Liquid Crystal Liquid).

Des moyens permettent d'améliorer l'intensité de la lumière diffusée par les articles façonnés. En particulier, pour des plaques, ce sont par exemple des points sérigraphiés sur au moins l'une des faces des plaques ; ou bien ce sont des films se présentant sous forme de bandes adhésives parallèles espacées régulièrement ou non les unes des autres, la distance séparant ces bandes pouvant être plus étroite au fur et à mesure que l'on s'éloigne de la source lumineuse. Ces films sont placés sur l'une ou les deux faces (celle par laquelle on observe la lumière diffusée et/ou la face opposée). De préférence, seule la face opposée à celle par laquelle on observe la lumière diffusée porte un film sous forme de bandes parallèles. Ces bandes adhèrent à la surface du panneau par tout moyen approprié. Dans le cas où le film sur la face opposée à celle par laquelle on observe la lumière diffusée est sous forme de bandes, un film ou une plaque peut être placé(e) sur ce film pour éviter les pertes de lumière.

Les exemples suivants illustrent la présente invention sans toutefois en limiter la portée. Les abréviations suivantes ont été utilisées :
- MMA : méthacrylate de méthyle
- PMMA : poly(méthacrylate de méthyle)
- PTFE : polytétrafluoroéthylène
- PA : polyamide
- PVC : poly(chlorure de vinyle)
- PS : polystyrène (réticulé)
   - Le PMMA en perles utilisé pour la fabrication de plaques extrudées était celui commercialisé par la société ATOGLAS sous la dénomination "OROGLAS® 9EL".
   - Les particules de PTFE utilisées comme additif provoquant la diffusion de la lumière étaient celles commercialisées par la société DUPONT DE NEMOURS sous la dénomination "ZONYL® 1200" ayant un diamètre moyen de 4µm et celles commercialisées sous la dénomination "ZONYL® 1000", ayant un diamètre moyen des particules 11µm. L'indice de réfraction du PTFE est n = 1,376 ("Polymer Handbook - Wiley Interscience Publication"), lequel est significativement différent de celui du PMMA (n = 1,498).
   - Les particules de PS utilisées comme additif provoquant la diffusion de la lumière étaient celles commercialisées par la société SEKISUI sous la dénomination commerciale "PS grade SBX-6". Ces particules ont un diamètre moyen de 6 µm et un indice de réfraction n de 1,5916).
   - Les plaques de référence (témoin) auxquelles ont été comparées les plaques de l'invention obtenues par coulée ou extrusion étaient des plaques de PMMA coulées de 8 mm, 5 mm et 15 mm d'épaisseur (plaques de référence notées respectivement R₈, R₅ et R₁₅), commercialisées par la société ATOGLAS sous la dénomination "ALTUGLAS ELIT® ". Ces plaques contiennent, comme additif provoquant la diffusion de la lumière, du polyamide commercialisé par ELF ATOCHEM S.A. sous la dénomination "ORGASOL 2001® ", à raison de 150 ppm.

Sur le dessin annexé, on a représenté :

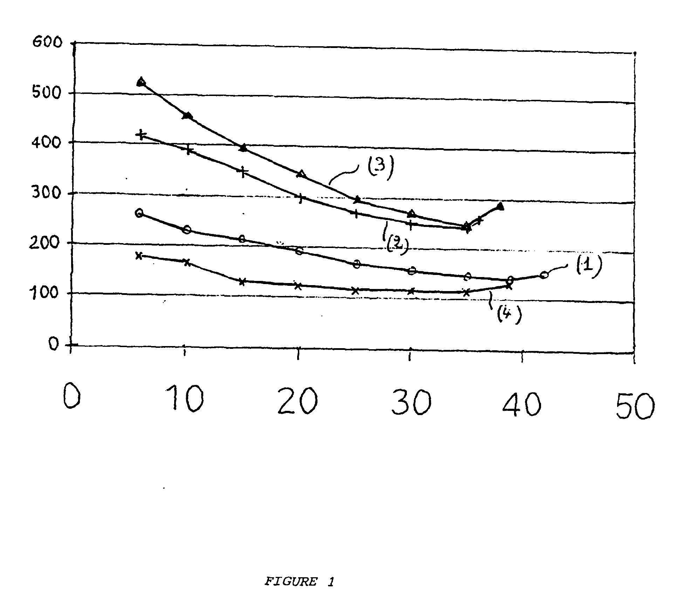

- sur la Figure 1, les graphes de l'intensité lumineuse (exprimée en lux) en fonction de la distance de la source lumineuse (exprimée en cm) pour les plaques coulées selon l'invention des exemples 1 à 3 (graphes 1, 2 et 3) et pour la plaque coulée de référence R₈ (graphe 4), avec un éclairage à une extrémité des plaques ;

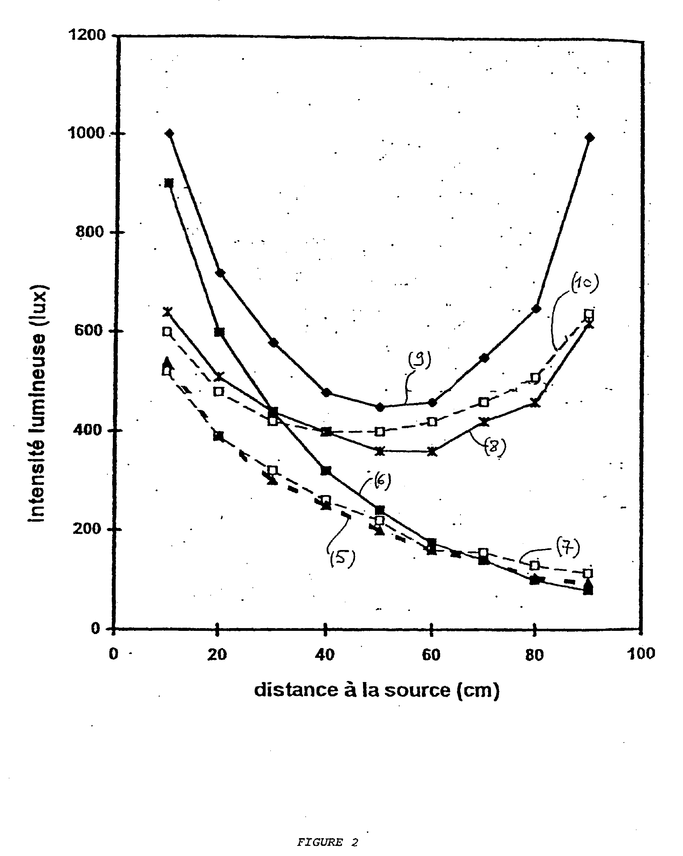

- sur la Figure 2, les graphes de l'intensité lumineuse (exprimée en lux) en fonction de la distance de la source lumineuse (exprimée en cm) pour les plaques extrudées (épaisseur de 8 mm) selon l'invention des exemples 4 et 5 et pour la plaque coulée de référence R₈ (épaisseur de 8 mm), avec un éclairage, d'une part, à une extrémité des plaques (graphes 5, 6 et 7) et d'autre part, aux deux extrémités des plaques (graphes 8, 9 et 10), sur une longueur de 100 cm ; les graphes 5 et 6 correspondent respectivement aux plaques contenant 30 ppm et 60 ppm de PTFE. Le graphe 7 correspond au témoin R₈. Les graphes 8 et 9 correspondent aux plaques contenant respectivement 30 ppm et 60 ppm de PTFE et le graphe 10 correspond au témoin R₈.

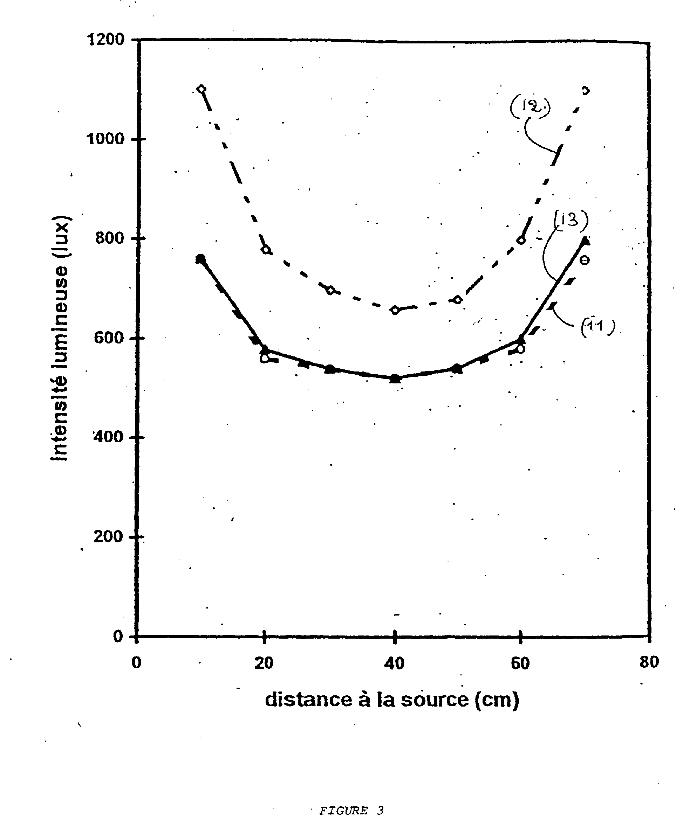

- sur la Figure 3, les graphes (11, 12 et 13) de l'intensité lumineuse (exprimée en lux) en fonction de la distance de la source lumineuse (exprimée en cm), pour les plaques extrudées (8 mm d'épaisseur) selon l'invention des exemples 4 et 5 et pour la plaque coulée de référence R₈, avec un éclairage aux deux extrémités des plaques, sur une longueur de 80 cm. Les graphes 11 et 12 correspondent aux plaques contenant respectivement 30 ppm et 60 ppm de PTFE. Le graphe 13 correspond au témoin R₈.

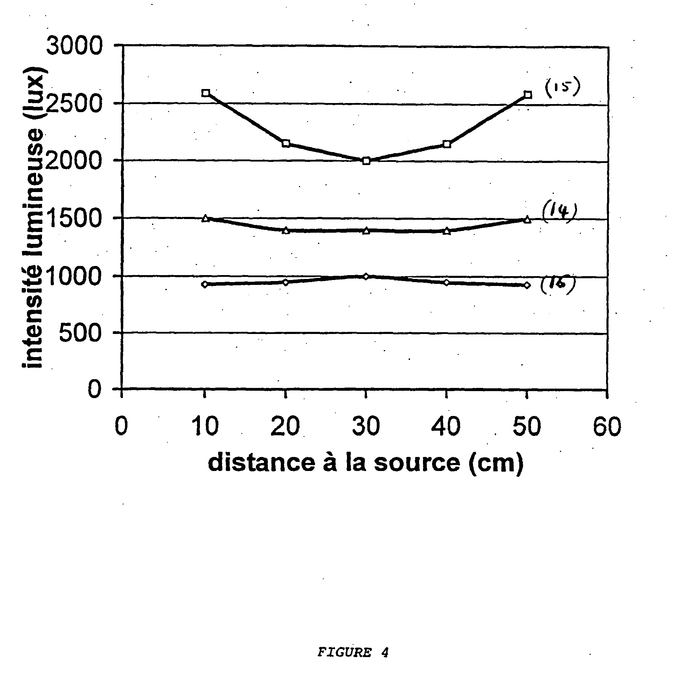

- sur la Figure 4, les graphes (14, 15 et 16) de l'intensité lumineuse (exprimée en lux) en fonction de la distance de la source lumineuse (exprimée en cm), pour les plaques extrudées (15 mm d'épaisseur) selon l'invention des exemples 6 et 7 et pour la plaque coulée de référence R₁₅, avec un éclairage aux deux extrémités des plaques, sur une longueur de 60 cm. Le graphe 14 correspond à la plaque contenant 46 ppm de PTFE. Le graphe 15 correspond à la plaque contenant 50 ppm de PTFE et 20 ppm de PS. Le graphe 16 correspond au témoin R₁₅.

### Exemples 1 à 3 : Fabrication de plaques coulées de PMMA incorporant PTFE

### (a) Mode opératoire général

On a préparé un prépolymère en ajoutant 20 ppm en poids de catalyseur 2,2-azobis-isobutyronitrile dans du MMA. On a chauffé le mélange à 90°C afin d'obtenir un taux de conversion de l'ordre de 7%. Une fois ce prépolymère refroidi, les quantités de catalyseur nécessaires à la polymérisation (250 ppm en poids) accompagné de 55 ppm en poids d'agent de transfert de chaîne (terpinolène) ont été ajoutés, ainsi que l'additif qui provoque la diffusion de la lumière, à savoir des particules de PTFE "ZONYL® 1200" (diamètre moyen des particules de 4 µm) dans les quantités indiquées dans le tableau 1. Des agents démoulants classiques ont également été incorporés.

Par ailleurs, un moule a été confectionné au moyen de deux glaces de verre séparées à leur périphérie par un joint en PVC souple. Le diamètre du joint détermine l'épaisseur de plaque finale. Ces éléments ont été assemblés avec des pinces métalliques. Le format des plaques préparées est de 200 x 500 x 10 mm.

Le mélange a été mis sous vide pendant 30 minutes afin d'éliminer l'air contenu, puis il a été coulé dans le moule décrit ci-dessus. Une fois rempli, le moule a été fermé et introduit dans une étuve ventilée afin de polymériser le MMA. Le cycle de température consistait à chauffer à 55°C pendant 600 minutes, puis à 120°C pendant 2 heures afin d'assurer une conversion maximale.

| **Exemple** | **Additif provoquant la diffusion de la lumière** | **Teneur de cet additif (ppm)** |
|---|---|---|
| 1 | PTFE | 40 |
| 2 | PTFE | 60 |
| 3 | PTFE | 90 |
| Témoin R₈ | Polyamide | 150 |

### (b) Evaluation de l'intensité lumineuse obtenue sur des plaques coulées

Pour effectuer cette évaluation, l'éclairage de chacune des plaques a été réalisé au moyen du tube fluorescent REFLEX® de 13W commercialisé par la société PHILIPS, appliqué sur la tranche de la plaque du format tel que préparé ci-dessus. Le tube fluorescent a été placé dans un profilé présentant une lèvre de 10 mm. La plaque a été insérée dans cette lèvre. De cette façon, la lumière émise était dirigée exclusivement du côté de la plaque. Le côté en contact avec la lumière a été préalablement poli, les autres ayant été revêtus du film réfléchissant en polyester commercialisé sous la dénomination "TAPE 850" par la société 3M. Un fond blanc opaque a été placé pour réfléchir la lumière vers l'avant sur la face de la plaque opposée à celle pour laquelle on observe la lumière diffusée. Ce montage est analogue à celui de la Figure 2 de EP-A-0-893481, excepté qu'il n'est pas prévu ici de plaque 12 servant à simuler une affiche publicitaire.

L'évaluation de l'intensité lumineuse a été effectuée face aux plaques ainsi préparées. L'intensité lumineuse a été mesurée à la surface de chacune des plaques avec un luxmètre dont la cellule a été placée de 5 cm à 45 cm de la source lumineuse.

### (c) Résultats

A la Figure 1, on note que l'on obtient un gain d'intensité lumineuse avec les plaques des exemples 1 à 3 (graphes 1 à 3) par rapport au graphe 4 concernant la plaque coulée de référence R₈ (150 ppm d'additif diffusant).

### Exemples 4 et 5 : Fabrication de plaques extrudées de PMMA incorporant PTFE

Des plaques extrudées de PMMA de dimension 2000 mm x 3000 mm x 8 mm, contenant des particules de PTFE "ZONYL® 1000" (diamètre moyen 11µm) à raison de 30 et 60 ppm (exemples respectivement 4 et 5) ont été réalisées, en introduisant dans une extrudeuse monovis, 1 % (exemple 4) ou 2 % (exemple 5) d'un mélange maître constitué de 3000 ppm de PTFE dans du PMMA ; la matière (PMMA + PTFE) a été chauffée à une température comprise entre 220 et 240°C dans l'extrudeuse.

Les plaques (2000 mm x 3000 mm x 8 mm) obtenues ont été découpées au format souhaité (largeur 30 cm et longueur 80 cm ou 100 cm).

Les Figures 2 et 3 du dessin annexé décrivent le comportement des plaques selon les exemples 4 et 5 avec comparaison avec celui de la plaque de référence R₈.

Les plaques ont été étudiées sur une longueur de 100 cm (Figure 2) en étant éclairées à une extrémité (graphes 5, 6 et 7) et à deux extrémités (graphes 8, 9 et 10). Elles ont aussi été étudiées sur une longueur de 80 cm (Figure 3), en étant éclairées aux deux extrémités (graphes 11, 12 et 13). Les sources d'éclairage étaient des tubes REFLEX® de 13W de la société PHILIPS, afin de simuler le comportement d'un porte-affiche. L'éclairage à une extrémité correspond au montage de la Figure 2 de EP-0893481, et celui aux deux extrémités, au montage de la Figure 1 de cette même demande de brevet, excepté qu'il n'est pas prévu ici de plaque 12 servant à simuler une affiche publicitaire.

Les résultats obtenus avec les plaques contenant 30 ppm de PTFE de l'exemple 4 (graphes 5, 8 et 11) sont tout à fait comparables avec ceux de la plaque coulée de référence R₈ de même épaisseur mais contenant 150 ppm d'additif diffusant (Figures 2 et 3), que l'éclairage se fasse à l'une ou aux deux extrémités des plaques.

La plaque selon l'exemple 5 contenant 60 ppm de PTFE (graphe 9) présente une intensité lumineuse plus forte que celle de la référence R₈ contenant 150 ppm d'additif diffusant (voir la Figure 2 dans le cas de l'éclairage aux deux extrémités).

La Figure 3 permet également de conclure que la plaque selon l'exemple 5 (graphe 12) dont la longueur est inférieure à 80 cm, présente une intensité lumineuse au centre de 26 % supérieure à celle obtenue avec la plaque de référence R₈ (graphe 13). La régularité de l'intensité lumineuse est peu affectée.

### Exemple 6 : Plaque extrudée de PMMA contenant du PTFE

On a préparé une plaque extrudée de PMMA d'une largeur de 2000 mm et 3000 mm de longueur et d'une épaisseur de 15 mm et contenant 46 ppm de particules de PTFE "ZONYL® 1000", en introduisant, dans l'extrudeuse monovis des exemples 4 et 5, 2% d'un mélange maître constitué de 2300 ppm de PTFE dans du PMMA.

On mesure l'intensité lumineuse de plaques de format 30 x 60 cm, obtenues à partir de cette plaque extrudée.

La Figure 4 du dessin annexé montre le comportement de la plaque de l'exemple 6 (graphe 14) avec comparaison avec celui de la plaque de référence R₁₅ (graphe 16).

Les plaques ont été étudiées sur une longueur de 60 cm en étant éclairée aux deux extrémités par deux tubes fluorescents Reflex® de 13W de la société PHILIPS.

On peut noter que les intensités lumieuses des plaques selon l'exemple 6 (graphe 14) et témoin (graphe 16) sont régulières sur toute la longueur des plaques.

L'intensité lumineuse de la plaque obtenue à l'exemple 6 est supérieure à celle du témoin R₁₅.

### Exempte 7 : Plaque extrudée de PMMA contenant du PTFE et du PS

Comme aux exemples 4 et 5, on a préparé une plaque extrudée de PMMA de 2000 mm x 3000 mm.

La plaque de l'exemple 7 a une épaisseur de 15 mm et contient un mélange de 50 ppm de particules de PTFE "ZONYL® 1000" et 20 ppm de particules de PS réticulé "PS grade SBX-6" de la Société SEKISUI. On l'a obtenue en introduisant, dans l'extrudeuse monovis des exemples 4 et 5, 2% d'un mélange maître constitué de 2500 ppm de PTFE et 1000 ppm de PS dans du PMMA.

On mesure l'intensité lumineuse sur des plaques de format 30 x 60 cm.

La Figure 4 du dessin annexé montre le comportement de la plaque de l'exemple 7 (graphe 15) avec comparaison avec celui de la plaque de références R₁₅ (graphe 16). Les plaques ont été étudiées sur une longueur de 60 cm en étant éclairée aux deux extrémités par deux tubes fluorescents Reflex® de 13W de la société PHILIPS.

L'intensité lumineuse de la plaque obtenue à l'exemple 7 est supérieure à celles obtenues avec les plaques de référence R₁₅ et de l'exemple 6.

## Revendications

1. Composition thermoplastique pour articles façonnés diffusant la lumière à base de matière thermoplastique transparente formée de (co)polymère (méth)acrylique et de particules diffusant la lumière **caractérisée en ce qu'**elle comprend des particules de poly(tétrafluorcéthylène) - PTFE - ou un mélange de particules de PTFE et de particules de composé minéral et/ou organique, ces particules diffusant la lumière ayant une dimension moyenne de 0,5 µm à 200 µm et un indice de réfraction différent de celui de la matière thermoplastique transparente d'au moins 0,05 et étant utilisées en quantité, par rapport à la composition totale, de 10 ppm à 200 ppm en poids.

2. Composition thermoplastique selon la revendication 1 **caractérisée en ce que** les particules diffusant la lumière ont une dimension moyenne comprise entre 2 µm et 20 µm.

3. Composition thermoplastique selon l'une des revendications 1 à 2 **caractérisée en ce que** les particules diffusant la lumière sont constituées uniquement par du poly(tétrafluarvéthylène).

4. Composition thermoplastique selon l'une des revendications 1 à 2 **caractérisée en ce que** les particules diffusant la lumière sont constituées par un mélange comprenant majoritairement des particules de poly(tétrafluoroéthylène).

5. Composition thermoplastique selon l'une des revendications 1 à 2 et 4, **caractérisée en ce que** les particules diffusant la lumière sont constituées par des particules de poly(tétrafluoroéthylène) et des particules à base de polystyrène réticulé.

6. Composition thermoplastique selon l'une des revendications 1 à 2 et 4 **caractérisée en ce que** les particules diffusant la lumière sont constituées par des particules de poly(tétrafluoroéthylène) et des particules de composé minéral choisi parmi le dioxyde de titane, le sulfate de baryum et l'oxyde de zinc.

7. Composition thermoplastique selon l'une des revendications 1 à 6, **caractérisée par le fait qu'**elle comprend un (co)polymère thermoplastique (méth)acrylique choisi parmi les poly(méthacrylates d'alkyle) et les copolymères de méthacrylate d'alkyle et d'au moins un monomère à insaturation(s) éthylénique(s) copolymérisable(s) avec le méthacrylate d'alkyle.

8. Composition thermoplastique selon la revendication 7, **caractérisée par le fait que** le (co)polymère thermoplastique comprend - de 70 à 100 % en poids du monomère principal: le méthacrylate d'alkyle; et - de 0 à 30 % en poids de monomère(s) à insaturation(s) éthylénique(s) copolymérisable(s) avec le méthacrylate d'alkyle.

9. Composition thermoplastique selon la revendication 8, **caractérisée par le fait que** les monomère(s) à insaturation(s) éthylénique(s) sont choisis parmi les acrylates d'alkyle en C₁-C₈, le styrène, les styrènes substitués, l'acrylonitrile, le méthacrylonitrile, les méthacrylates d'alkyle en C₁-C₈ différents du monomère principal, les acrylates et méthacrylates d'hydroxyalkyle en C₁-C₄, les acrylates et méthacrylates d'alcoxyalkyle en C₁₋C₄ ou d'aryloxyalkyle en C₁-C₄, l'acrylamide, le méthacrylamide, l'acide acrylique, l'acide méthacrylique, les maléimides et les diméthacrylates d'alkylène glycol dans lequel le groupe alkylène a de 1 à 4 atomes de carbone.

10. Composition thermoplastique selon l'une des revendications 7 à 9, **caractérisée par le fait que** le méthacrylate d'alkyle a de 1 à 8 atomes de carbone dans le groupe alkyle.

11. Composition thermoplastique selon la revendication 10, **caractérisée par le fait que** le méthacrylate d'alkyle est du méthacrylate de méthyle.

12. Article façonné diffusant la lumière obtenu par moulage par extrusion, injection, compression ou coulée à partir d'une matière thermoplastique transparente formée de (co)polymère (méth)acrylique comprenant de 70 à 100% en poids de méthacrylate de méthyle et de 0 à 30% en poids d'au moins un monomère à insaturation(s) éthylénique(s) copolymérisable(s) avec le méthacrylate de méthyle et, par rapport à la composition totale de 10 à 200 ppm en poids, de particules de PTFE diffusant la lumière ayant une dimension moyenne de 0,5 à 200 µm et un indice de réfraction différent de celui de la matière thermoplastique transparente d'au moins ± 0,05.

13. Article façonné diffusant la lumière obtenu par moulage par extrusion, injection, compression ou coulée à partir d'une matière thermoplastique transparente formée de (co)polymère (méth)acrylique et, par rapport à la composition totale, de 5 à 2000 ppm en poids, d'un mélange de particules de PTFE et de particules de composé minéral et/ou organique, particules diffusant la lumière et ayant une dimension moyenne de 0,5 à 200 µm et un indice de réfraction différent de celui de la matière thermoplastique transparente d'au moins ± 0 ,05.

14. Article selon l'une des revendications 12 ou 13 **caractérisé en ce que** les particules diffusant la lumière ont une dimension moyenne comprise entre 2 et 20 µm.

15. Article selon l'une des revendications 12 à 14 **caractérisé en ce que** les particules diffusant la lumière sont constituées uniquement par du PTFE.

16. Article selon l'une des revendications 12 à 14 **caractérisé en ce que** les particules diffusant la lumière sont constituées par un mélange comprenant majoritairement des particules de PTFE.

17. Article selon l'une des revendications 12 à 14 et 16 **caractérisé en ce que** les particules diffusant la lumière sont constituées par des particules de PTFE et des particules à base de polystyrène réticulé.

18. Article selon l'une des revendications 12 à 14 et 16 **caractérisé en ce que** les particules diffusant la lumière sont constituées par des particules de PTFE et des particules de composé minéral choisi parmi le dioxyde de titane, le sulfate de baryum et l'oxyde de zinc.

19. Article selon l'une des revendications 12 à 18 façonné sous forme de plaque.

20. Article façonné selon la revendication 19, comprenant une concentration en particules diffusant la lumière variant dans toute l'épaisseur de la plaque, la plus forte concentration se trouvant dans une zone proche de la surface de diffusion ou bien variant suivant la longueur de la plaque, la plus faible concentration se trouvant dans la zone proche de la source de lumière.

21. Article façonné selon l'une des revendications 19 et 20 **caractérisé en ce que** la plaque a une épaisseur de 3 mm à 25 mm.

22. Article façonné diffusant la lumière comprenant un support en matériau thermoplastique transparent formé de (co)polymère (méth)acrylique et une couche d'une composition telle que définie à l'une des revendications 1 à 11.

23. Article façonné selon la revendication 22, **caractérisé par le fait qu'**il est obtenu par coextrusion ou plaxage.

24. Article façonné selon l'une des revendications 22 et 23, **caractérisé en ce que** le support a une épaisseur de 2 mm à 25 mm et la couche formée par la composition, une épaisseur de 20 à 1000 µm.

25. Article façonné selon l'une des revendications 19 à 24 **caractérisé en ce qu'**il porte sur au moins une face des points sérigraphiés ou des films sous forme de bandes adhésives parallèles.

26. Application des articles selon l'une des revendications 12 à 25, à des systèmes d'affichage lumineux et des écrans lumineux plats.

27. Application d'un article façonné diffusant la lumière à des systèmes d'affichage lumineux et des écrans lumineux plats, l'article façonné étant obtenu par moulage par extrusion, injection, compression ou coulée à partir d'une matière thermoplastique transparente formée de (co)polymère (méth)acrylique comprenant par rapport à la composition totale, de 5 à 2000 ppm en poids, de particules diffusant la lumière telles que définies selon l'une des revendications 12 à 18.

28. Application d'un article façonné selon la revendication 27, l'article étant sous forme de plaque telle que définie selon l'une des revendications 19 à 21.

## Claims

1. Thermoplastic composition for shaped light-diffusing articles, which is based on a transparent thermoplastic formed from a (meth)acrylic (co)polymer and on light-scattering particles, **characterized in that** it comprises PTFE (polytetrafluoroethylene) particles or a mixture of PTFE particles and particles of a mineral and/or organic compound, these light-scattering particles having a mean size of 0.5 µm to 200 µm and a refractive index that differs from that of the transparent thermoplastic by at least 0.05, said particles being used in an amount of 10 ppm to 200 ppm by weight relative to the total composition.

2. Thermoplastic composition according to Claim 1, **characterized in that** the light-scattering particles have a mean size of between 2 µm and 20 µm.

3. Thermoplastic composition according to either of Claims 1 and 2, **characterized in that** the light-scattering particles consist only of polytetrafluoroethylene.

4. Thermoplastic composition according to either of Claims 1 and 2, **characterized in that** the light-scattering particles consist of a mixture comprising predominantly polytetrafluoroethylene particles.

5. Thermoplastic composition according to one of Claims 1, 2 and 4, **characterized in that** the light-scattering particles consist of polytetrafluoroethylene particles and particles based on crosslinked polystyrene.

6. Thermoplastic composition according to one of Claims 1, 2 and 4, **characterized in that** the light-scattering particles consist of polytetrafluoroethylene particles and particles of a mineral compound chosen from titanium dioxide, barium sulphate and zinc oxide.

7. Thermoplastic composition according to one of Claims 1 to 6, **characterized in that** it comprises a thermoplastic (meth)acrylic (co)polymer chosen from polyalkyl methacrylates and copolymers of an alkylmethacrylate with at least one ethylenically unsaturated monomer copolymerizable with the alkyl methacrylate.

8. Thermoplastic composition according to Claim 7, **characterized in that** the thermoplastic (co)polymer comprises from 70 to 100% by weight of the main monomer - the alkyl methacrylate - and from 0 to 30% by weight of ethylenically unsaturated monomer(s) copolymerizable with the alkylmethacrylate.

9. Thermoplastic composition according to Claim 8, **characterized in that** the ethylenically unsaturated monomer(s) are chosen from C₁-C₈ alkyl acrylates, styrene, substituted styrenes, acrylonitrile, methacrylonitrile, C₁-C₈ alkyl methacrylates different from the main monomer, C₁₋C₄ hydroxyalkyl acrylates and methacrylates, C₁-C₄ alkoxyalkyl or C₁-C₄ aryloxyalkyl acrylates and methacrylates, acrylamide, methacrylamide, acrylic cid, methacrylic acid, maleimides and alkyleneglycol dimethacrylates in which the alkylene group has from 1 to 4 carbon atoms.

10. Thermoplastic composition according to one of Claims 7 to 9, **characterized in that** the alkylmethacrylate has from 1 to 8 carbon atoms in the alkyl group.

11. Thermoplastic composition according to Claim 10, **characterized in that** the alkylmethacrylate is methylmethacrylate.

12. Shaped light-diffusing article obtained by extrusion moulding, injection moulding, compression moulding or cast moulding from a transparent thermoplastic formed from a (meth)acrylic (co)polymer comprising from 70 to 100% by weight of methylmethacrylate and from 0 to 30% by weight of at least one ethylenically unsaturated monomer copolymerizable with the methylmethacrylate and, relative to the total composition, from 10 to 200 ppm by weight of light-scattering PTFE particles having a mean size of 0.5 to 200 µm and a refractive index that differs from that of the transparent thermoplastic by at least ± 0.05.

13. Shaped light-diffusing article obtained by extrusion moulding, injection moulding, compression moulding or cast moulding from a transparent thermoplastic formed from a (meth)acrylic (co)polymer and, relative to the total composition, from 5 to 2000 ppm by weight of a mixture of PTFE particles and particles of a mineral and/or organic compound, said particles scattering light and having a mean size of 0.5 to 200 µm and a refractive index that differs from that of the transparent thermoplastic by at least ± 0.05.

14. Article according to either of Claims 12 and 13, **characterized in that** the light-scattering particles have a mean size of between 2 and 20 µm.

15. Article according to one of Claims 12 to 14, **characterized in that** the light-scattering particles consist only of PTFE.

16. Article according to one of Claims 12 to 14, **characterized in that** the light-scattering particles consist of a mixture comprising predominantly PTFE particles.

17. Article according to one of Claims 12 to 14 and 16, **characterized in that** the light-scattering particles consist of PTFE particles and particles based on crosslinked polystyrene.

18. Article according to one of Claims 12 to 14 and 16, **characterized in that** the light-scattering particles consist of PTFE particles and particles of a mineral compound chosen from titanium dioxide, barium sulphate and zinc oxide.

19. Article according to one of Claims 12 to 18 shaped in the form of a sheet.

20. Shaped article according to Claim 19, having a light-scattering particle concentration that varies throughout the thickness of the sheet, the highest concentration being in a region close to the diffusing surface, or that varies along the length of the sheet, the lowest concentration being in the region close to the light source.

21. Shaped article according to either of Claims 19 and 20, **characterized in that** the sheet has a thickness of 3 to 25 mm.

22. Shaped light-diffusing article comprising a support made of a transparent thermoplastic formed from a (meth)acrylic (co)polymer and a layer of a composition as defined in one of Claims 1 to 11.

23. Shaped article according to Claim 22, **characterized in that** it is obtained by coextrusion or lamination.

24. Shaped article according to either of Claims 22 and 23, **characterized in that** the support has a thickness of 2 to 25 mm and the layer formed by the composition has a thickness of 20 to 1000 µm.

25. Shaped article according to one of Claims 19 to 24, **characterized in that** it bears, on at least one face, screen-printed spots or films in the form of parallel adhesive strips.

26. Application of the articles according to one of Claims 12 to 15 to luminous display systems and flat luminous display screens.

27. Application of a shaped light-scattering article to luminous display systems and flat luminous display screens, the shaped article being obtained by extrusion moulding, injection moulding, compression moulding or cast moulding from a transparent thermoplastic formed from a (meth)acrylic (co)polymer comprising, relative to the total composition, from 5 to 2000 ppm by weight of light-scattering particles as defined in one of Claims 12 to 18.

28. Application of a shaped article according to Claim 27, the article being in the form of a sheet as defined in one of Claims 19 to 21.

## Patentansprüche

1. Thermoplastische Zusammensetzung für lichtstreuende Formartikel auf der Basis eines transparenten thermoplastischen Materials, das aus (Meth)acryl(co)polymer und lichtstreuenden Teilchen gebildet ist, **dadurch gekennzeichnet, dass** es Teilchen aus Poly(tetrafluorethylen) - PTFE - oder einer Mischung aus PTFE-Teilchen und Teilchen aus einer mineralischen und/oder organischen Verbindung umfasst, wobei diese lichtstreuenden Teilchen eine mittle Größe von 0,5 µm bis 200 µm und einen Brechungsindex haben, der von jenem des transparenten thermoplastischen Materials um mindestens 0,05 verschieden ist, und mengenmäßig im Verhältnis zur Gesamtzusammensetzung zwischen 10 Gew.-ppm bis 200 Gew.-ppm verwendet wird.

2. Thermoplastische Zusammensetzung nach Anspruch 1, **dadurch gekennzeichnet, dass** die lichtstreuenden Teilchen eine mittlere Größe zwischen 2 µm und 20 µm haben.

3. Thermoplastische Zusammensetzung nach einem der Ansprüche 1 bis 2, **dadurch gekennzeichnet, dass** die lichtstreuenden Teilchen nur aus Poly(tetrafluorethylen) bestehen.

4. Thermoplastische Zusammensetzung nach einem der Ansprüche 1 bis 2, **dadurch gekennzeichnet, dass** die lichtstreuenden Teilchen aus einer Mischung bestehen, deren größerer Anteil Poly(tetrafluorethylen) ist.

5. Thermoplastische Zusammensetzung nach einem der Ansprüche 1 bis 2 und 4, **dadurch gekennzeichnet, dass** die lichtstreuenden Teilchen aus Teilchen aus Poly(tetrafluorethylen) und Teilchen auf der Basis von vernetztem Polystyrol bestehen.

6. Thermoplastische Zusammensetzung nach einem der Ansprüche 1 bis 2 und 4, **dadurch gekennzeichnet, dass** die lichtstreuenden Teilchen aus Teilchen aus Poly(tetrafluorethylen) und Teilchen aus einer mineralischen Verbindung bestehen, die ausgewählt ist aus Titandioxid, Bariumsulfat und Zinkoxid.

7. Thermoplastische Zusammensetzung nach einem der Ansprüche 1 bis 6, **gekennzeichnet durch** die Tatsache, dass sie ein thermoplastisches (Meth)acryl(co)polymer umfasst, ausgewählt aus Poly(alkylmethacrylaten) und Akylkmethacrylatcopolymeren und mindestens einem Monomer mit einer (mehreren) ethylenisch ungesättigten Gruppe(n), die mit dem Alkylmethacrylat copolymerisierbar ist (sind).

8. Thermoplastische Zusammensetzung nach Anspruch 7, **gekennzeichnet durch** die Tatsache, dass das thermoplastische (Co)polymer - 70 bis 100 Gew.-% des Hauptmonomers: Alkylmethacrylat umfasst; und - 0 bis 30 Gew.-% des (der) ethylenisch ungesättigten Monomers (Monomere), das (die) mit dem Alkylmethacrylat copolymerisierbar ist (sind).

9. Thermoplastische Zusammensetzung nach Anspruch 8, **gekennzeichnet durch** die Tatsache, dass das (die) ethylenisch ungesättigte(n) Monomer(e) ausgewählt ist (sind) aus C₁-C₈-Alkylacrylaten, Styrol, substituierten Styrolen, Acrylnitril, Methacrylnitril, C₁-C₈₋Alkylmethacrylaten, verschieden vom Hauptmonomer, C₁-C₄₋Hydroxyalkylacrylaten und -methacrylaten, C₁-C₄₋Alkoxyalkylacrylaten und -methacrylaten oder C₁-C₄₋Aryloxyalkyl, Acrylamid, Methacrylamid, Acrylsäure, Methacrylsäure, Maleimiden und Alkylenglycoldimethacrylaten, worin die Alkylengruppe 1 bis 4 Kohlenstoffatome hat.

10. Thermoplastische Zusammensetzung nach einem der Ansprüche 7 bis 9, **gekennzeichnet durch** die Tatsache, dass das Alkylmethacrylat 1 bis 8 Kohlenstoffatome in der Alkylgruppe hat.

11. Thermoplastische Zusammensetzung nach Anspruch 10, **gekennzeichnet durch** die Tatsache, dass das Alkylmethacrylat Methylmethacrylat ist.

12. Lichtstreuender Formartikel, der durch Extrudieren, Spritzgießen, Formpressen oder Formgießen aus einem transparenten thermoplastischen Material erhalten wird, gebildet aus (Meth)acryl(co)polymer, das 70 bis 100 Gew.-% Methylmethacrylat und 0 bis 30 Gew.-% mindestens eines Monomers mit einer (mehreren) ethylenisch ungesättigten Gruppe(n), die mit Methylmethacrylat copolymerisierbar ist (sind) und im Verhältnis zur Gesamtzusammensetzung 10 bis 200 Gew.-ppm lichtstreuende PTFE-Teilchen, die eine mittlere Größe von 0,5 bis 200 µm und einen Brechungsindex haben, der von dem des transparenten thermoplastischen Materials um mindestens ± 0,05 verschieden ist, umfasst.

13. Lichtstreuender Formartikel, der durch Extrudieren, Spritzgießen, Formpressen oder Formgießen aus einem transparenten thermoplastischen Material erhalten wird, das aus (Meth)acryl(co)polymer, im Verhältnis zur Gesamtzusammensetzung aus 5 bis 2000 Gew.-ppm einer Mischung aus PTFE-Teilchen und Teilchen einer mineralischen und/oder organischen Verbindung, lichtstreuenden Teilchen gebildet ist, und die eine mittlere Größe von 0,5 bis 200 µm und einen Brechungsindex haben, der von dem des transparenten thermoplastischen Materials um mindestens ± 0,05 verschieden ist.

14. Artikel nach einem der Ansprüche 12 oder 13, **dadurch gekennzeichnet, dass** die lichtstreuenden Teilchen eine mittlere Größe zwischen 2 µm und 20 µm haben.

15. Artikel nach einem der Ansprüche 12 bis 14, **dadurch gekennzeichnet, dass** die lichtstreuenden Teilchen nur aus PTFE bestehen.

16. Artikel nach einem der Ansprüche 12 bis 14, **dadurch gekennzeichnet, dass** die lichtstreuenden Teilchen aus einer Mischung bestehen, deren größerer Anteil PTFE-Teilchen sind.

17. Artikel nach einem der Ansprüche 12 bis 14 und 16, **dadurch gekennzeichnet, dass** die lichtstreuenden Teilchen aus PTFE-Teilchen und Teilchen auf der Basis von vernetztem Polystyrol bestehen.

18. Artikel nach einem der Ansprüche 12 bis 14 und 16, **dadurch gekennzeichnet, dass** die lichtstreuenden Teilchen aus PTFE-Teilchen und Teilchen aus einer mineralischen Verbindung bestehen, die ausgewählt ist aus Titandioxid, Bariumsulfat und Zinkoxid.

19. Artikel nach einem der Ansprüche 12 bis 18, der in Form einer Platte geformt ist.

20. Formartikel nach Anspruch 19, der eine Konzentration an lichtstreuenden Teilchen umfasst, die über die gesamte Dicke der Platte variieren, wobei sich die höchste Konzentration in einer Zone nahe der Streufläche befindet, oder die auch längs der Platte variieren, wobei sich die niedrigste Konzentration in der Zone befindet, die nahe der Lichtquelle liegt.

21. Formartikel nach einem der Ansprüche 19 und 20, **dadurch gekennzeichnet, dass** die Platte eine Dicke von 3 mm bis 25 mm hat.

22. Lichtstreuender Formartikel, der einen Träger aus transparentem thermoplastischem Material, das aus (Meth)acryl(co)polymer gebildet ist, und eine Schicht einer Zusammensetzung, wie in einem der Ansprüche 1 bis 11 definiert, umfasst.

23. Formartikel nach Anspruch 22, **gekennzeichnet durch** die Tatsache, dass er **durch** Coextrudieren oder Beschichten erhalten wird.

24. Formartikel nach einem der Ansprüche 22 und 23, **dadurch gekennzeichnet, dass** der Träger eine Dicke von 2 mm bis 25 mm und die von der Zusammensetzung gebildete Schicht eine Dicke von 20 bis 1000 µm hat.

25. Formartikel nach einem der Ansprüche 19 bis 24, **dadurch gekennzeichnet, dass** er auf mindestens einer Seite siebgedruckte Punkte oder Filme in Form von parallelen Klebestreifen trägt.

26. Anwendung der Artikel nach einem der Ansprüche 12 bis 25 in Leuchtanzeigesystemen und flachen Lichtschirmen.

27. Anwendung eines lichtstreuenden Formartikels in Leuchtanzeigesystemen und flachen Lichtschirmen, wobei der Formartikel durch Extrudieren, Spritzgießen, Formpressen oder Formgießen aus einem transparenten thermoplastischen Material erhalten wird, das aus (Meth)acryl(co)polymer gebildet ist, das im Verhältnis zur Gesamtzusammensetzung 5 bis 2000 Gew.-ppm lichtstreuende Teilchen umfasst, wie in einem der Ansprüche 12 bis 18 definiert.

28. Anwendung eines Formartikels nach Anspruch 27, wobei der Artikel die Form einer Platte hat, wie in einem der Ansprüche 19 bis 21 definiert.
